# EUROPEAN PATENT APPLICATION

(11) **EP 3 751 164 A1**
(43) Date of publication of application: **16.12.2020**
(21) Application number: 20178525.0
(22) Date of filing: 05.06.2020
(51) Int. Cl.: F16D 3/84

(54) **A COMPACT BOOT FOR A CONSTANT VELOCITY JOINT FOR MOTOR VEHICLES**

(30) Priority: 12.06.2019 IT 201900008751
(71) Applicant: Insit Industria S.p.A., 10129 Torino (IT)
(72) Inventor: GALGANI BURGO, Luigi, I-10129 Torino (IT); VISCA, Gianni, I-10129 Torino (IT)
(74) Representative: Buzzi, Franco

(57) **Abstract**

Compact boot (1) for constant velocity joints (G) of motor vehicles comprising a corrugated portion (4) which joins together the ends of different diameters (2, 3) of the boot (1) and it has substantially concentric radially external annular convolute (5) and radially internal annular convolute (6).

## Description

### Field of the invention

The present invention relates to a boot for constant velocity joints of motor vehicles, and more specifically, a compact boot comprising a tubular body made of flexible material having a larger diameter end configured to be applied to the joint and a smaller diameter end configured to be applied to a shaft for actuating the joint. Such ends of the tubular body are joined by a corrugated portion which typically comprises substantially concentric radially external annular convolute and radially internal annular convolute.

### State of the prior art

Known from documents KR 101865190, US 5251916, US4747805 and FR1248548 are boots thus made, i.e. provided with convolutes extending in a direction perpendicular to the longitudinal axis of the boot. This configuration of the convolutes allows to limit the overall dimensions of the boot with respect to a conventional boot in which the convolutes extend in a direction parallel to the longitudinal axis of the boot. Thus, such convolute configuration allows to obtain boots that are more compact, lighter and, during use, that require a smaller amount of grease for lubricating the components of the protected joint, with respect to a conventional boot.

French patent application FR2882013 A1 discloses a boot provided with a pair of convolutes extending in a direction substantially parallel to the longitudinal axis of the boot. Provided for is a second guard element required to connect the radially internal end of the boot and the shaft for actuating the joint. This solution is not very practical, it is expensive to produce and it entails an increase in the time required for the maintenance of the joint.

International patent application WO2018153440 A1 discloses a boot provided with a corrugated portion comprising a reinforcement fin arranged on an external peripheral portion of the corrugated portion and with a plurality of radial ribs arranged above the reinforcement fin. The corrugated portion comprises a single radially internal convolute.

German patent application DE3644888 A1 discloses a boot comprising a corrugated portion in which the radially internal annular portion, configured to be applied to a shaft for actuating the joint, forms an angle of 180° with the longitudinal axis of the boot.

Also such solutions are not very practical for the maintenance of the joint and they complex to implement.

### Summary of the invention

The object of the present invention is to further improve the advantages of a boot provided with a corrugated portion which has substantially concentric annular convolutes, optimising and improving the conformation of such convolutes.

In order to achieve such object, the invention relates to a compact boot for constant velocity joints of motor vehicles of the type defined in the preamble of claim 1, wherein each of the convolutes defines respectively radially external peak and internal valley, whose primary characteristic lies in the fact that the radially external peak comprises a radially external annular portion having the same diameter as the larger diameter end of the boot and extending along the continuation of the larger diameter end of the boot. The radially external peak has a smaller width than the radially internal peak, the radially internal valley has a width equal to about 3 times the width of the radially external valley, and a radially internal annular portion of the radially external peak forms an angle of about 20° with the axis of the boot.

In a preferred embodiment of the invention the radially internal peak extends beyond a plane perpendicular to the axis of the boot passing through the top of the radially external peak. The radially external valley extends beyond a plane perpendicular to the axis of the boot passing through the bottom of the internal valley.

According to a further aspect of the invention, a radially internal annular portion of the internal valley forms an angle of about 3° with the longitudinal axis of the boot.

Thanks to this solution idea, the boot according to the invention is advantageously more compact than the prior art boots, with the advantage of being able to be installed in close proximity to the joint requiring a lower amount of grease.

### Brief description of the drawings

The invention will now be described in detail with reference to the attached drawings, provided purely by way of non-limiting example, wherein:
- figure 1 is a schematic perspective view of an embodiment of the boot according to the invention,
- figure 2 is a lateral elevational view of figure 1,
- figure 3 is an axial sectional view according to line III-III of figure 2, and
- figure 4 is an axial sectional view wherein the boot according to the invention is installed on a constant velocity joint of a motor vehicle.

### Detailed description of the invention

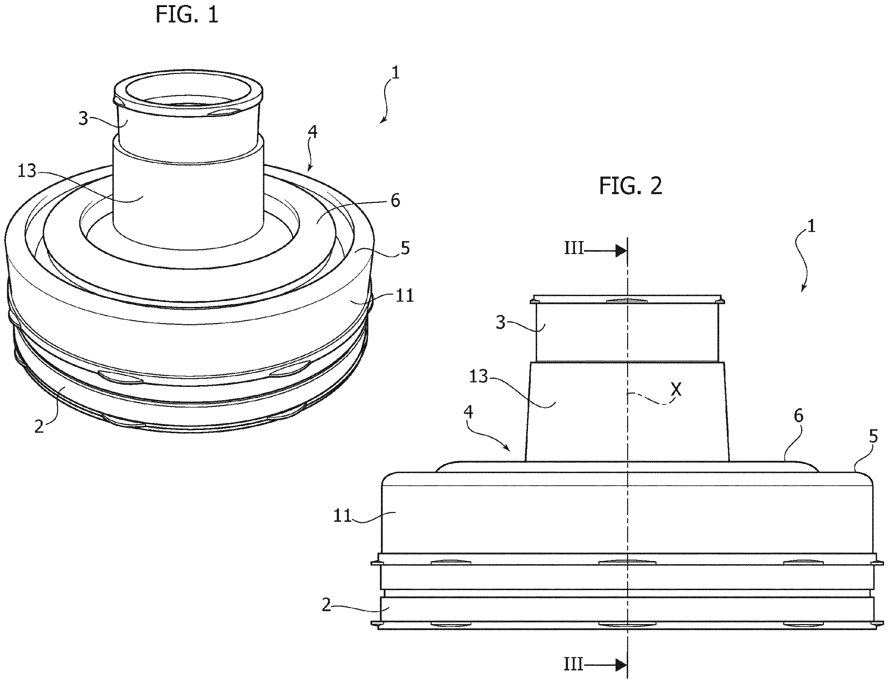

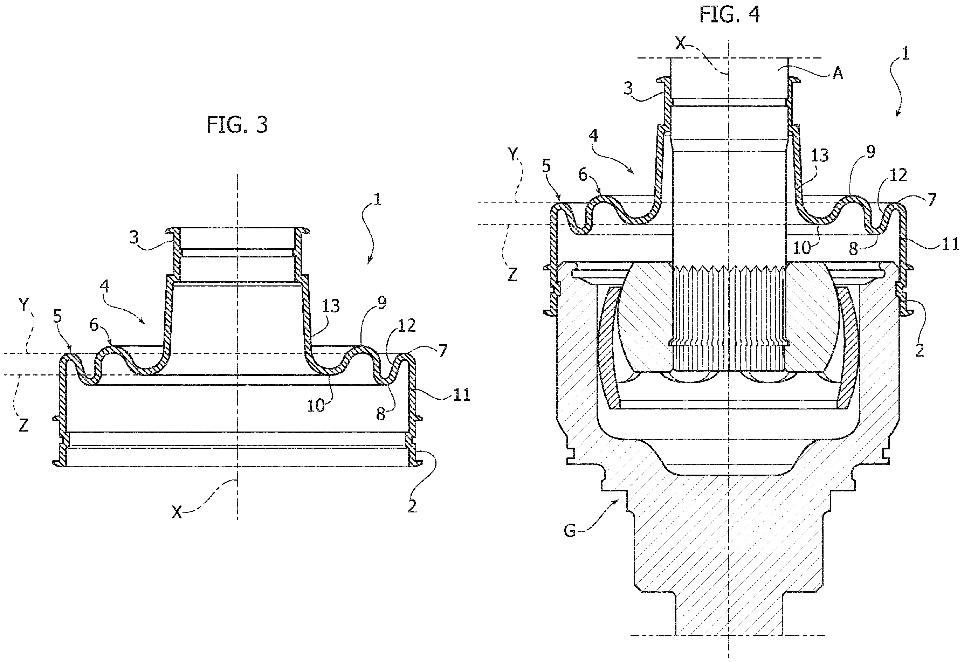

With reference initially to figures 1 and 2, a compact boot for constant velocity joints of motor vehicles according to the invention comprising a tubular body made of flexible material, generally thermoplastic rubber, having a longitudinal axis of symmetry X is generally indicated with reference number 1. With reference to Figure 4, the boot 1 has a larger diameter end 2 configured to be fitted on the constant velocity joint indicated generically with G, and a smaller diameter end 3 configured to be applied on a shaft A for actuating the joint G. A corrugated portion, generally indicated by 4, joins said ends 2, 3 of the boot 1 together and it has substantially concentric radially external annular convolute 5 and radially internal annular convolute 6.

Now, with reference to Figure 3, the radially external convolute 5, i.e. the one having the larger diameter, defines a radially external peak 7 and valley 8, while the radially internal convolute 6 having the smaller diameter 3 defines a radially internal peak 9 and valley 10.

The peak 7 of the radially external convolute 5 comprises a radially external annular portion 11 and a radially internal annular portion 12.

The radially external annular portion 11 extends along the continuation of the larger diameter end 2 of the boot 1.

In the case of the example described herein, the radially internal portion 12 of the peak 7 has an angle of inclination of about 20° with respect to the longitudinal axis X.

It should also be noted that the radially internal peak 9 extends axially beyond or above a plane Y perpendicular to the axis X of the boot 1 passing through the top of the radially external peak 7. Thus, the radially internal peak 9 projects from the upper part of the corrugated portion 4 more than the radially external peak 7.

The radially external peak 7 has a radial width smaller than that of the radially internal peak 9.

The radially internal valley 10 has a radial width equal to about 3 times the width of the radially external valley 8. The radially internal valley 10 also has a radially internal portion 13 which forms an angle of about 3° with the longitudinal axis X of the boot 1. This radially internal portion 13 connects the corrugated portion 4 to the smaller diameter end 3 of the boot 1.

The radially external valley 8 extends axially beyond or below a plane Z perpendicular to the axis X of the boot 1 passing through the bottom of the radially internal valley 10: i.e., the radially external valley 8 projects from the lower part of the corrugated portion 4 more than the radially internal valley 10.

Obviously, the construction details and the embodiments may widely vary with respect to what has been described and illustrated, without departing from the scope of protection of the present invention as defined in the claims that follow. Thus, for example, the general conformation of the boot 1 could be different from the one shown in the drawings.

## Claims

1. A compact boot (1) for constant-velocity joints (G) for motor vehicles comprising:
a tubular body made of flexible material having a longitudinal axis (X), a larger diameter end (2) configured to be applied on the joint (G), a smaller diameter end (3) configured to be applied on a shaft (A) for actuating the joint (G), and a corrugated portion (4) connecting said ends (2, 3) to each other and having a substantially concentric radially external annular convolute (5) and radially internal annular convolute (6),
each of said convolutes (5, 6) respectively defining a radially external peak (7) and valley (8) and a radially internal peak (9) and valley (10),
**characterised in that**
said radially external peak (7) comprises a radially external annular portion (11) having the same diameter as said larger diameter end (2) of the boot (1) and extending on the continuation of said larger diameter end (2) of the boot (1),
said radially external peak (7) has a smaller width than the width of said radially internal peak (9),
said radially internal valley (10) has a width which is about 3 times the width of said radially external valley (8), and **in that**
a radially internal annular portion (12) of said radially external peak (7) forms an angle of about 20° with the axis (X) of the boot (1).

2. The boot (1) according to claim 1, **characterised in that** said radially internal peak (9) extends axially above a plane (Y) perpendicular to the axis (X) of the boot (1) passing through the top of said radially external peak (7), and
said radially external valley (8) extends axially beneath a plane (Z) perpendicular to the axis (X) of the boot (1) passing through the bottom of said radially internal valley (10).

3. The boot (1) according to any one of the preceding claims, **characterised in that** a radially internal annular portion (13) of said radially internal valley (10) forms an angle of about 3° with the longitudinal axis (X) of the boot (1).
